# EUROPEAN PATENT APPLICATION

(11) **EP 4 624 112 A1**
(43) Date of publication of application: **01.10.2025**
(21) Application number: 23907127.7
(22) Date of filing: 21.12.2023
(51) Int. Cl.: B25J 9/22

(54) **TEACHING DEVICE, ROBOT SYSTEM, AND ROBOT TEACHING METHOD**

(30) Priority: 21.12.2022 JP 2022204726
(71) Applicant: KAWASAKI JUKOGYO KABUSHIKI KAISHA, Kobe-shi, Hyogo 650-8670 (JP)
(72) Inventor: OHIGE Takashi, Kobe-shi, Hyogo 650-8670 (JP); SHINOHARA Tsukasa, Kobe-shi, Hyogo 650-8670 (JP)
(74) Representative: Müller-Boré & Partner Patentanwälte PartG mbB
(86) International application number: PCT/JP2023/045851
(87) International publication number: WO 2024/135767

(57) **Abstract**

A teaching device (30) includes a first physical operation unit (40a) to receive a first operation, a second physical operation unit (40b) to receive a second operation, and a controller (32) configured or programmed to perform the first operation and the second operation. The controller (32) is configured or programmed to, when both the first operation unit and the second operation unit are operated, receive a third operation different from the first operation and the second operation, and perform the third operation.

## Description

### Technical Field

The present disclosure relates to a teaching device, a robot system, and a robot teaching method.

### Background Art

Conventionally, a teaching device is disclosed that receives a teaching operation to teach operation of a robot to a robot controller. In Japanese Patent Laid-Open No. 2010-120095, a teaching device includes a display that displays various information and a keypad for performing operations using keys. The keypad includes a plurality of buttons as physical operation units.

### Prior Art

### Patent Document

Patent Document 1: Japanese Patent Laid-Open No. 2010-120095

### Summary of the Invention

In a conventional teaching device such as that described in Japanese Patent Laid-Open No. 2010-120095, the operations to be received are assigned to the plurality of buttons that serve as physical operation units, respectively. The physical buttons are, for example, a directional pad that is arranged separately from the display and used to move a cursor in any direction, up, down, left or right, on an input screen of the display. The physical buttons are, for example, a numeric keypad that is arranged separately from the display and used to input numbers on the input screen of the display. However, in the conventional teaching device such as that described in Japanese Patent Laid-Open No. 2010-120095, alphabets and the like that are not assigned to the plurality of physical buttons are input using a software keyboard displayed on the display. Therefore, an operator needs to display the software keyboard, move the cursor to select an alphabet on the software keyboard, and input the alphabet into the input screen by pressing a physical button, and thus user's labor is

### disadvantageously required.

The present disclosure is intended to solve the above problem. The present disclosure aims to provide a teaching device, a robot system, and a robot teaching method each capable of reducing operator's labor in input operations.

A teaching device according to a first aspect of the present disclosure is a teaching device for a robot, and includes a display, a first physical operation unit separate from the display to receive a first operation, a second physical operation unit separate from the display to receive a second operation, and a controller configured or programmed to perform the first operation and the second operation. The controller is configured or programmed to, when both the first operation unit and the second operation unit are operated, receive a third operation different from the first operation and the second operation, and perform the third operation. The term "when both the first operation unit and the second operation unit are operated" indicates a concept including a case in which the first operation unit and the second operation unit are operated simultaneously and a case in which the first operation unit and the second operation unit are operated successively.

In the teaching device according to the first aspect of the present disclosure, as described above, the controller is configured or programmed to, when both the first operation unit and the second operation unit are operated, receive the third operation different from the first operation and the second operation, and perform the third operation. Accordingly, the third operation that is not assigned to the first physical operation unit or the second physical operation unit can be performed by the first physical operation unit and the second physical operation unit arranged separately from the display without displaying a software keyboard on the display, for example. Consequently, it is possible to reduce operator's labor in input operations.

A robot system according to a second aspect of the present disclosure includes a robot, a robot controller configured or programmed to control the robot, and a teaching device for the robot. The teaching device includes a display, a first physical operation unit separate from the display to receive a first operation, a second physical operation unit separate from the display to receive a second operation, and a controller configured or programmed to perform the first operation and the second operation. The controller is configured or programmed to, when both the first operation unit and the second operation unit are operated, receive a third operation different from the first operation and the second operation, and perform the third operation. The term "when both the first operation unit and the second operation unit are operated" indicates a concept including a case in which the first operation unit and the second operation unit are operated simultaneously and a case in which the first operation unit and the second operation unit are operated successively.

In the robot system according to the second aspect of the present disclosure, as described above, the controller is configured or programmed to, when both the first operation unit and the second operation unit are operated, receive the third operation different from the first operation and the second operation, and perform the third operation. Accordingly, the third operation that is not assigned to the first physical operation unit or the second physical operation unit can be performed by the first physical operation unit and the second physical operation unit arranged separately from the display without displaying a software keyboard on the display, for example. Consequently, it is possible to provide the robot system capable of reducing operator's labor in input operations.

A robot teaching method according to a third aspect of the present disclosure is a robot teaching method using a teaching device including a display, a first physical operation unit separate from the display, a second physical operation unit separate from the display, and a controller configured or programmed to perform the first operation and the second operation. The controller is configured or programmed to perform the first operation when the first operation unit is operated, the controller is configured or programmed to perform the second operation when the second operation unit is operated, and the controller is configured or programmed to, when both the first operation unit and the second operation unit are operated, receive a third operation different from the first operation and the second operation, and perform the third operation. The term "when both the first operation unit and the second operation unit are operated" indicates a concept including a case in which the first operation unit and the second operation unit are operated simultaneously and a case in which the first operation unit and the second operation unit are operated successively.

In the robot teaching method according to the third aspect of the present disclosure, as described above, the controller is configured or programmed to, when both the first operation unit and the second operation unit are operated, receive the third operation on the input screen different from the first operation and the second operation, and perform the third operation. Accordingly, the third operation that is not assigned to the first physical operation unit or the second physical operation unit can be performed by the first physical operation unit and the second physical operation unit arranged separately from the display without displaying a software keyboard on the display, for example. Consequently, it is possible to provide the robot teaching method capable of reducing

### operator's labor in input operations.

According to the present disclosure, it is possible to reduce operator's labor in operations on the input screen.

### Brief Description of the Drawings

FIG. 1 is a diagram showing the configuration of a robot system according to an embodiment.
FIG. 2 is a block diagram showing the configuration of the robot system according to the embodiment.
FIG. 3 is a diagram showing a teaching device according to the embodiment.
FIG. 4 is a diagram showing an input screen of the teaching device according to the embodiment.
FIG. 5 is a diagram showing a program editing screen according to the embodiment.
FIG. 6 is a diagram showing a numeric keypad of the teaching device according to the embodiment.
FIG. 7 is a diagram for illustrating moving operation of a cursor when only cursor movement keys are operated and when both the cursor movement keys and function keys are operated.
FIG. 8 is a diagram showing a switch of the input screen of the teaching device according to the embodiment.
FIG. 9 is a diagram for illustrating characters entered when both the numeric keypad and a registration key or the cursor movement keys are operated with an alphabet input selected.
FIG. 10 is a diagram for illustrating characters entered when the numeric keypad is operated.
FIG. 11 is a diagram for illustrating characters entered when both the numeric keypad and the registration key or the cursor movement keys are operated with a symbol input selected.
FIG. 12 is a diagram showing a state in which a first list is displayed on the input screen according to the embodiment.
FIG. 13 is a diagram showing a state in which a second list is displayed on the input screen according to the embodiment.
FIG. 14 is a flow diagram for illustrating a robot teaching method according to the embodiment.
FIG. 15 is a diagram showing a state in which a second list is displayed on an input screen according to a modified example.

### Modes for Carrying Out the Invention

An embodiment embodying the present disclosure is hereinafter described on the basis of the drawings.

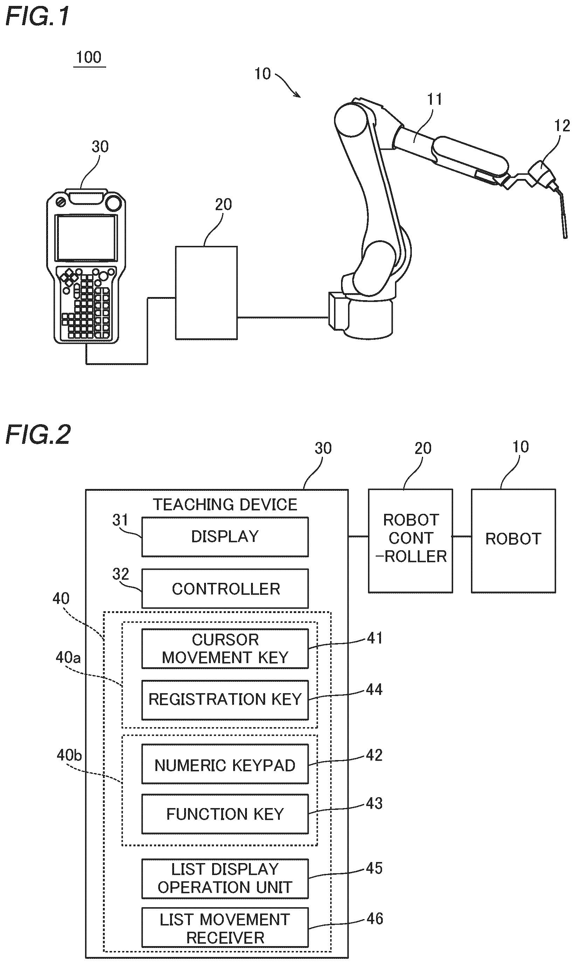

As shown in FIG. 1, a robot system 100 includes a robot 10, a robot controller 20, and a teaching device 30.

The robot 10 includes a robot arm 11. An end effector 12 is attached to a distal end of the robot arm 11. The robot 10 is a vertical articulated robot, for example. Although one robot 10 is arranged in the robot system 100 in FIG. 1, a plurality of robots 10 may be arranged in the robot system 100. Furthermore, a single teaching device 30 may teach operation to each of the plurality of robots 10, or a teaching device 30 may be arranged for each of the plurality of robots 10. Moreover, a robot 10 to be taught as a teaching target may be selected from among the plurality of robots 10 by the single teaching device 30. In addition, although an example in which the robot controller 20 and the teaching device 30 are connected to each other by wire is shown in FIG. 1, the robot controller 20 and the teaching device 30 may be connected to each other wirelessly.

The robot controller 20 controls the robot 10. The robot controller 20 causes the robot 10 to operate based on a program taught by the teaching device 30.

As shown in FIG. 2, the teaching device 30 is a teaching device 30 for the robot 10. The teaching device 30 receives a teaching operation to teach the operation of the robot 10 to the robot controller 20. The teaching device 30 includes a display 31, a controller 32, a physical operation unit 40, a list display operation unit 45, and a list movement receiver 46. The physical operation unit 40 includes a first operation unit 40a and a second operation unit 40b. The list display operation unit 45 is an example of a content display operation unit.

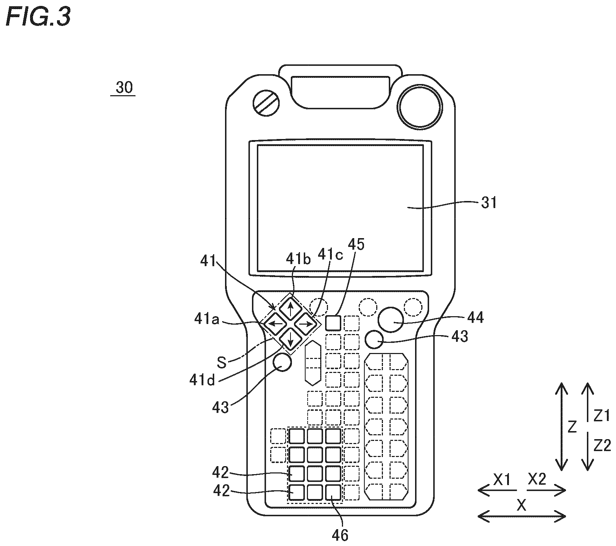

In the following description, a direction along the short side of the rectangular display 31 of the teaching device 30 shown in FIG. 3 is defined as an upward-downward direction, and a direction along the long side of the display 31 is defined as a right-left direction. The upward-downward direction is defined as a Z direction. The upward direction is defined as a Z1 direction, and the downward direction is defined as a Z2 direction. The right-left direction is defined as an X direction. The left direction is defined as an X1 direction, and the right direction is defined as an X2 direction.

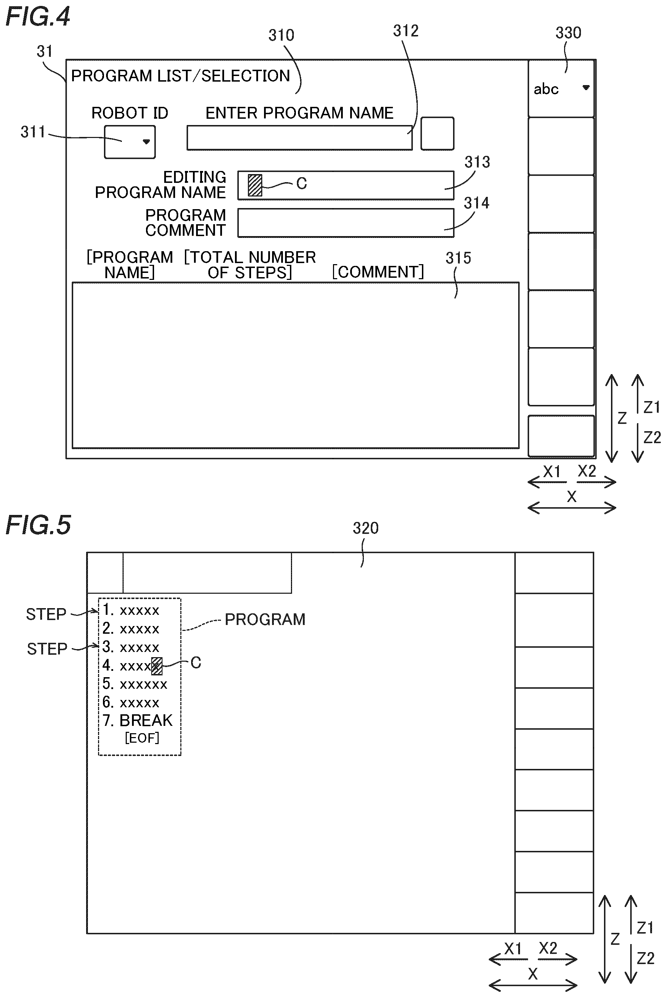

As shown in FIG. 3, when an operator holds the teaching device 30, the display 31 is arranged on the Z1 side of the teaching device 30. The display 31 includes a liquid crystal panel, for example. In this embodiment, the display 31 is not a touch panel. An input screen 310 as shown in FIG. 4 is displayed on the display 31.

As shown in FIG. 4, the input screen 310 includes a selector 311, an input 312, an input 313, an input 314, and a list display 315. The selector 311 receives a selection of the ID of the robot 10 in a pull-down format. The input 312 receives a text input of a program name that causes the robot 10 to operate. The input 313 receives a text input of a program name being edited. The input 314 receives a text input of a program comment. The list display 315 displays a list of the program name, the total number of steps in the program, and the comment.

As shown in FIG. 5, a program editing screen 320 is displayed on the display 31 as a screen separate from the input screen 310 shown in FIG. 4. On the program editing screen 320, a text input is received.

As shown in FIG. 3, the teaching device 30 includes cursor movement keys 41 as the first operation unit 40a. The cursor movement keys 41 are arranged separately from the display 31. The cursor movement keys 41 are arranged on the Z2 side with respect to the display 31. The cursor movement keys 41 move a cursor C shown in FIGS. 4 and 5 on the input screen 310 displayed on the display 31. A plurality of cursor movement keys 41 are arranged corresponding to a plurality of directions in which the cursor C is movable. For example, the cursor movement keys 41 include a cursor movement key 41a, a cursor movement key 41b, a cursor movement key 41c, and a cursor movement key 41d. The cursor movement key 41a moves the cursor C to the X1 side on the input screen 310. The cursor movement key 41b moves the cursor C to the Z1 side on the input screen 310. The cursor movement key 41c moves the cursor C to the X2 side on the input screen 310. The cursor movement key 41d moves the cursor C to the Z2 side on the input screen 310. An arrow indicating the direction in which the cursor C is to be moved is printed on each of the cursor movement keys 41a, 41b, 41c, and 41d. An operation to move the cursor C is an example of a first operation.

In the teaching device 30, the cursor movement keys 41a, 41b, 41c, and 41d are arranged in a cross shape. The cursor movement keys 41a, 41b, 41c, and 41d are arranged so as to correspond to the directions in which the cursor C is movable. That is, in a substantially diamond-shaped area S in which the cursor movement keys 41a, 41b, 41c, and 41d are arranged, the cursor movement key 41a is arranged on the X1 side, and the cursor movement key 41c is arranged on the X2 side. In the area S, the cursor movement key 41b is arranged on the Z1 side, and the cursor movement key 41d is arranged on the Z2 side. The cursor movement keys 41a, 41b, 41c, and 41d each have a substantially diamond shape, for example.

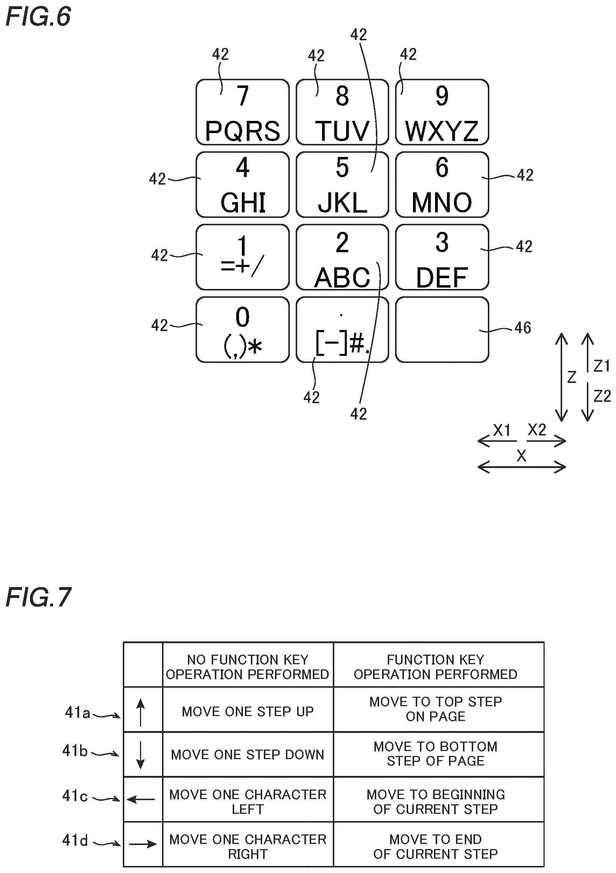

As shown in FIG. 3, the teaching device 30 includes a numeric keypad 42 including a plurality of keys as the second operation unit 40b. The numeric keypad 42 is arranged separately from the display 31. The numeric keypad 42 is arranged on the Z2 side with respect to the cursor movement keys 41. The numeric keypad 42 receives an input of numbers on the input screen 310 displayed on the display 31. As shown in FIG. 6, each key of the numeric keypad 42 receives an input of one of numbers 0 to 9 and a period. The plurality of keys of the numeric keypad 42 are arranged corresponding to the numbers 0 to 9 and the period. The keys of the numeric keypad 42 each have a substantially square shape, for example. The plurality of keys of the numeric keypad 42 are arranged in a matrix. On each of the plurality of keys of the numeric keypad 42, a number, an alphabet, and a symbol that can be input by the key of the numeric keypad 42 are printed. Operations to input the numbers 0 to 9 and the period as the symbol are examples of a second operation.

As shown in FIG. 3, the teaching device 30 includes function keys 43 as the second operation unit 40b. The function keys 43 are arranged separately from the display 31. One function key 43 is arranged on the Z2 side with respect to the cursor movement keys 41, and the other function key 43 is arranged on the X2 side with respect to the cursor movement keys 41. The number of function keys 43 may be other than two. A predetermined function is assigned to each of the function keys 43. Operations to input the predetermined functions using the function keys 43 are examples of a second operation.

The teaching device 30 includes a registration key 44 as the first operation unit 40a. The registration key 44 is arranged separately from the display 31. The registration key 44 is arranged on the X2 side with respect to the cursor movement keys 41. The registration key 44 receives an operation to confirm an input. The operation to confirm an input is an example of a first operation.

The cursor movement keys 41, numeric keypad 42, function keys 43, and registration key 44 described above are push button switches, for example. The positions of these keys in the teaching device 30 are not limited to those described above. In the following, the cursor movement keys 41 and the registration key 44 are collectively referred to as the first operation unit 40a. The numeric keypad 42 and the function keys 43 are collectively referred to as the second operation unit 40b.

The controller 32 receives operations of the teaching device 30 by the operator. The operations of the teaching device 30 are editing operations of a program that causes the robot 10 to operate, for example. The controller 32 performs the first operation and the second operation. For example, the controller 32 moves the cursor C as the first operation. The controller 32 confirms an input using the registration key 44 as the first operation. The controller 32 displays the numbers 0 to 9 and the period input using the numeric keypad 42 on the display 31 as the second operation.

In this embodiment, when both the first operation unit 40a and the second operation unit 40b are operated, the controller 32 receives a third operation different from the first operation and the second operation, and performs the third operation. The third operation includes at least one of moving the cursor C on the display 31 that is different from the first operation, inputting alphabets on the display 31, inputting symbols on the display 31, or inputting numbers on the display 31. A specific description is given below.

In this embodiment, as shown in FIG. 7, when both the cursor movement keys 41 and the function keys 43 are operated, the controller 32 moves the cursor C differently from the movement of the cursor C received by the cursor movement keys 41. Specifically, when both the cursor movement keys 41 and the function keys 43 are operated, the controller 32 moves the cursor C by a movement amount larger than the movement amount of the cursor C when the cursor movement keys 41 are operated. For example, as shown in FIG. 5, when only the cursor movement key 41b is operated, the cursor C moves one step upward on the program editing screen 320. When the cursor movement key 41b is pressed and held down, the cursor C moves one step upward continuously. When both the cursor movement key 41b and the function keys 43 are operated, the cursor C moves from the current position to the top step of the program. When both the cursor movement key 41b and the function keys 43 are operated, the cursor C may move to an upper position skipping one step from the current position. Similarly, when both the cursor movement key 41d and the function keys 43 are operated, the cursor C moves from the current position to the bottom step of the program. When both the cursor movement key 41d and the function keys 43 are operated, the cursor C may move to a lower position skipping one step from the current position. When only the cursor movement key 41a is operated, the cursor C moves one step to the left on the program editing screen 320. When the cursor movement key 41a is pressed and held down, the cursor C moves one step to the left continuously. When both the cursor movement key 41a and the function keys 43 are operated, the cursor C moves to the beginning of the current step. When both the cursor movement key 41a and the function keys 43 are operated, the cursor C may move to a left position skipping one character. Similarly, when both the cursor movement key 41c and the function keys 43 are operated, the cursor C moves to the end of the current step. When both the cursor movement key 41c and the function keys 43 are operated, the cursor C may move to a right position skipping one character.

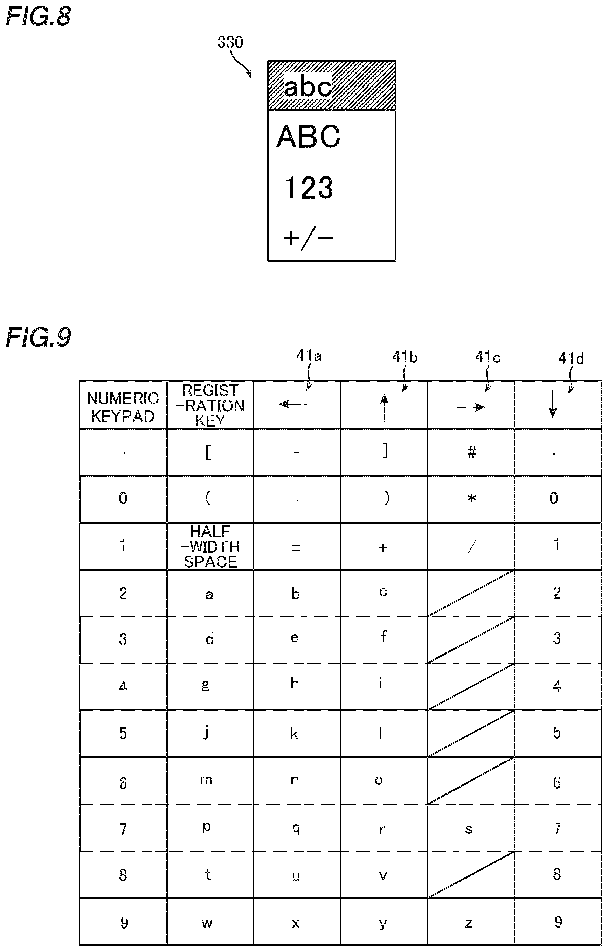

In this embodiment, the input screen 310 includes a switch 330, as shown in FIG. 4. The switch 330 is arranged on the input screen 310 and switches the third operation described below to inputting alphabets, inputting symbols, or inputting numbers. Specifically, as shown in FIG. 8, the switch 330 is in a pull-down format. The operator uses the switch 330 to select inputting lowercase alphabets, inputting uppercase alphabets, inputting numbers, or inputting symbols. A selection in the switch 330 is made based on operations of the cursor movement keys 41 by the operator.

In this embodiment, as shown in FIG. 9, when both the cursor movement key 41 or the registration key 44 and one of the plurality of keys of the numeric keypad 42 are operated, the controller 32 receives an input of one of an alphabet, a symbol, and a number. After the numeric keypad 42 is operated, the controller 32 switches between the alphabet, the symbol, and the number to be input depending on whether the registration key 44 or one of the plurality of cursor movement keys 41 is operated. For example, it is assumed that the operator selects an input of lowercase alphabets using the switch 330. In such a case, as shown in FIG. 9, after a key of the numeric keypad 42 corresponding to 8 is operated, the registration key 44 is operated to input a lowercase alphabet t. After the key of the numeric keypad 42 corresponding to 8 is operated, the cursor movement key 41b is operated to input a lowercase alphabet v. After the key of the numeric keypad 42 corresponding to 8 is operated, the cursor movement key 41d is operated to input 8.

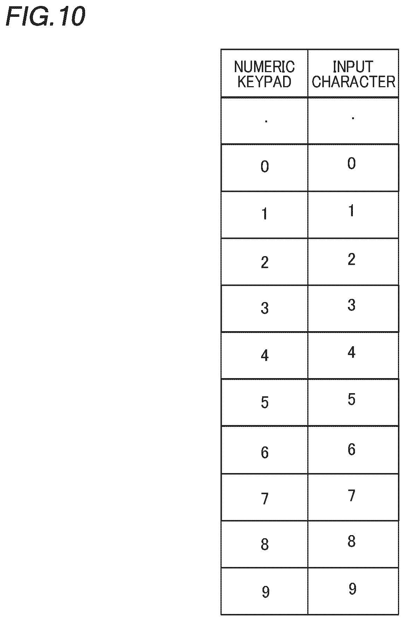

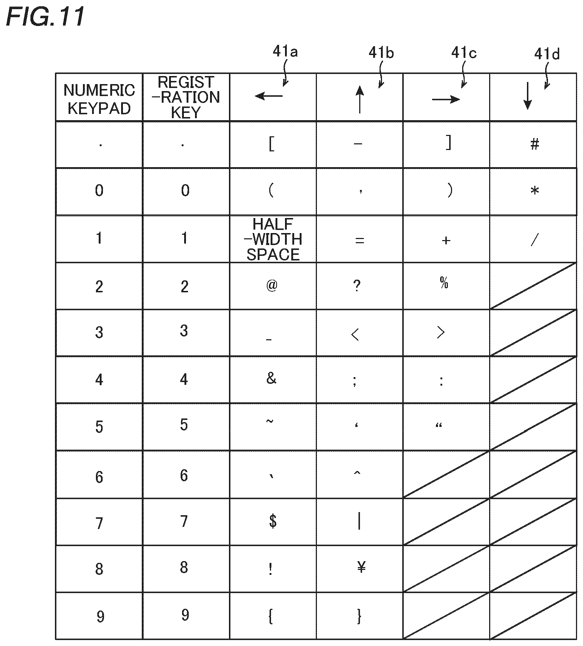

When the operator selects an input of uppercase alphabets using the switch 330, the controller 32 receives the input of uppercase alphabets. As shown in FIG. 10, when the operator selects an input of numbers using the switch 330, the controller 32 receives an input of numbers and symbols displayed on the numeric keypad 42. As shown in FIG. 11, when the operator selects an input of symbols using the switch 330, the controller 32 receives an input of numbers and symbols. For example, after a key of the numeric keypad 42 corresponding to 5 is operated, the registration key 44 is operated to input 5. After a key of the numeric keypad 42 corresponding to 9 is operated, the cursor movement key 41b is operated to input a symbol }.

In this embodiment, when the numeric keypad 42 is successively operated, the controller 32 switches between alphabets, symbols, and numbers as input candidates to be input by the numeric keypad 42. When the operation unit 40 other than the operated numeric keypad 42 is operated, the controller 32 receives an input of selected ones of the alphabets, symbols, and numbers. For example, as shown in FIG. 9, when the operator selects an input of lowercase alphabets using the switch 330 and successively operates a key of the numeric keypad 42 corresponding to 7, a character to be input is switched in the order of p, **q, r, s, 7,** p, and q. Then, for example, after the type of alphabet is switched to q, another physical operation unit 40 is operated such that the controller 32 receives an input of an alphabet q. As shown in FIG. 11, when the operator selects an input of symbols using the switch 330 and successively operates a key of the numeric keypad 42 corresponding to 2, the type of symbol is switched in the order of 2, @, ?, %, and 2.

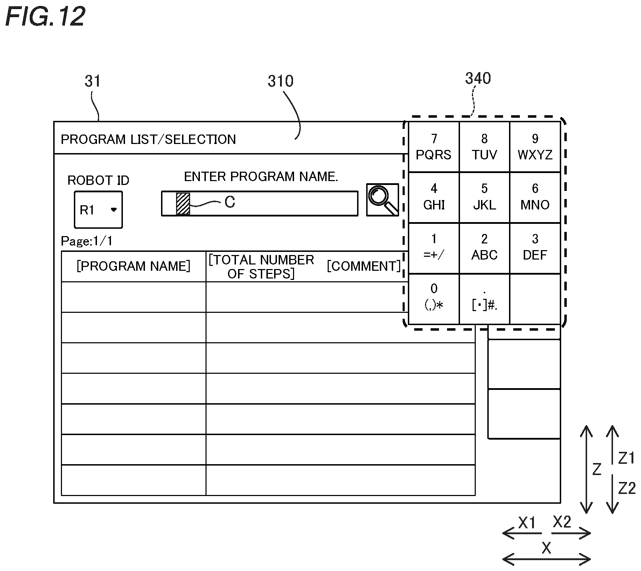

In this embodiment, as shown in FIG. 12, the list display operation unit 45 receives an operation to cause the display 31 to display the contents of the third operation. Specifically, the list display operation unit 45 is a physical operation unit 40 that receives an operation to cause the display 31 to display a first list 340 including numbers, alphabets, symbols, and numbers that can be input by the plurality of keys of the numeric keypad 42. As shown in FIG. 3, the list display operation unit 45 is arranged separately from the display 31. The list display operation unit 45 is arranged on the X2 side with respect to the cursor movement keys 41, for example. The list display operation unit 45 has a substantially rectangular shape, for example. As shown in FIG. 12, the operator operates the list display operation unit 45 to display the first list 340 on the display 31. In the first list 340, images corresponding to the plurality of keys of the numeric keypad 42 are displayed in the same manner as the arrangement of the plurality of keys of the numeric keypad 42 arranged on the teaching device 30.

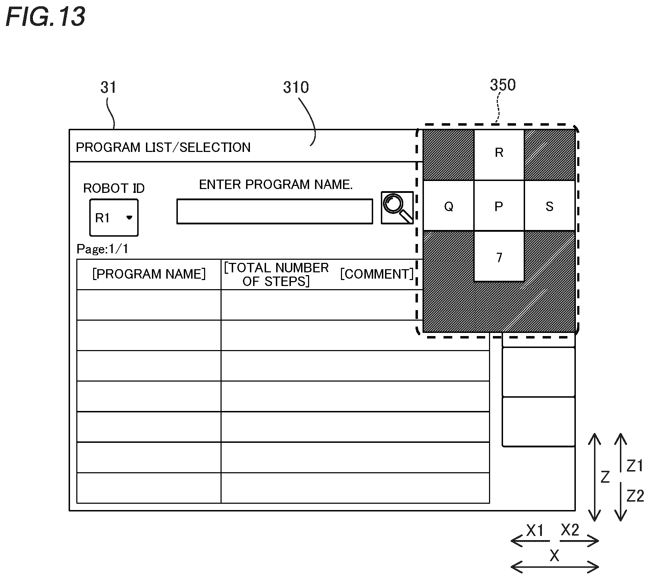

In this embodiment, as shown in FIG. 13, when the numeric keypad 42 is operated with the first list 340 displayed on the display 31, the controller 32 causes the display 31 to display a second list 350 including alphabets, symbols, and numbers that can be input by the operated numeric keypad 42 in correspondence with the arrangement positions of the cursor movement keys 41. For example, when the key of the numeric keypad 42 corresponding to 7 is operated with the first list 340 displayed on the display 31, characters 7, P, Q, R, and S are displayed in the second list 350. The arrangement of these characters corresponds to the arrangement positions of the cursor movement keys 41a, 41b, 41c, and 41d arranged in a cross shape. That is, when an input of uppercase alphabets is selected, a character Q to be input by operating both the key of the numeric keypad 42 corresponding to 7 and the cursor movement key 41a arranged on the left side is arranged on the left side in the second list 350. A character P to be input by operating both the key of the numeric keypad 42 corresponding to 7 and the registration key 44 is arranged in the center of the second list 350.

In this embodiment, when the registration key 44 or the cursor movement key 41 is operated with the second list 350 displayed on the display 31, the controller 32 receives an input of an alphabet, a symbol, or a number corresponding to the registration key 44 or the arrangement position of the operated cursor movement key 41. For example, as shown in FIG. 13, when the cursor movement key 41a is operated with the second list 350 displayed on the display 31, an input of Q is received when an input of uppercase alphabets is selected.

In this embodiment, as shown in FIG. 3, the list movement receiver 46 is a physical operation unit 40 that receives an operation to change the display position of the first list 340. The list movement receiver 46 is arranged in the lower right of the plurality of keys of the numeric keypad 42, for example. When the list display operation unit 45 is operated, the first list 340 is displayed at the upper right of the input screen 310, for example. When the operator successively operates the list movement receiver 46, the display position of the first list 340 on the input screen 310 is switched in the order of lower right, lower left, upper left, and upper right.

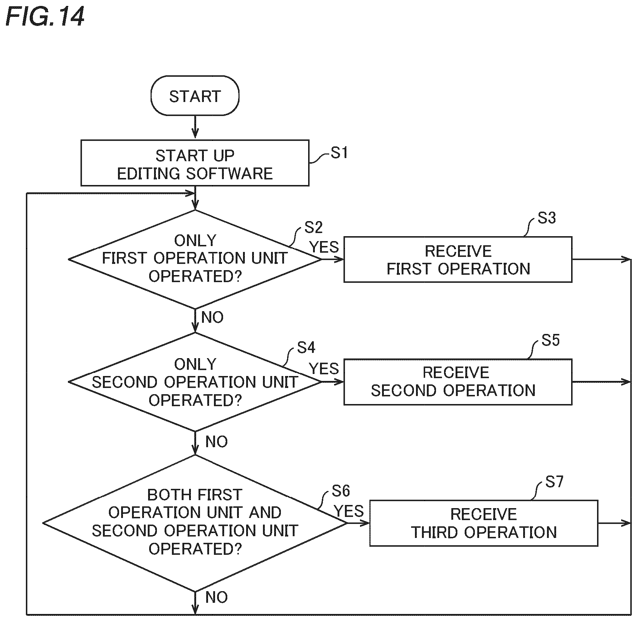

A robot teaching method is now described with reference to FIG. 14.

In step S1, the controller 32 starts up the editing software based on an operation of the teaching device 30 by the operator.

In step S2, the controller 32 determines whether or not only the first operation unit 40a has been operated. In a case of yes in step S2, the controller 32 advances to step S3. In a case of no, the controller 32 advances to step S4.

In step S3, the controller 32 performs the first operation. For example, when the operator operates the cursor movement keys 41, the controller 32 moves the cursor C on the input screen 310.

In step S4, the controller 32 determines whether or not only the second operation unit 40b has been operated. In a case of yes in step S4, the controller 32 advances to step S5. In a case of no, the controller 32 advances to step S6.

In step S5, the controller 32 performs the second operation. For example, when the operator operates the numeric keypad 42, the controller 32 displays, on the display 31, a number or symbol corresponding to the operated key of the numeric keypad 42.

In step S6, the controller 32 determines whether or not both the first operation unit 40a and the second operation unit 40b have been operated. In a case of yes in step S6, the controller 32 advances to step S7. In a case of no, the controller 32 returns to step S2.

In step S7, the controller 32 receives the third operation on the input screen 310, which is different from the first operation and the second operation, and performs the third operation. For example, the controller 32 receives an input of an alphabet v when the cursor movement key 41b is operated after the key of the numeric keypad 42 corresponding to 8 is operated, and displays the input alphabet v on the display 31.

### Advantages of This Embodiment

The controller 32 is configured or programmed to, when both the first operation unit 40a and the second operation unit 40b are operated, receive the third operation, such as an input of alphabets, different from the first operation and the second operation on the input screen 310, and perform the third operation. Accordingly, the third operation that is not assigned to the first physical operation unit 40a or the second physical operation unit 40b can be performed by the first physical operation unit 40a and the second physical operation unit 40b arranged separately from the display 31 without displaying a software keyboard on the display 31, for example. Consequently, it is possible to reduce operator's labor in input operations.

The third operation includes at least one of moving the cursor C differently from movement of the cursor C by the cursor movement keys 41 as the first operation unit on the display 31, inputting alphabets on the display 31, inputting symbols on the display 31, or inputting numbers on the display 31. Accordingly, it is possible to perform at least one of the following operations: moving the cursor a larger distance than a distance traveled under a normal operation, inputting alphabets, and inputting symbols without providing a physical operation unit 40 for at least one of moving the cursor C differently from the movement of the cursor C by the cursor movement keys 41, inputting alphabets, or inputting symbols.

The teaching device 30 further includes the switch 330 on the input screen 310 to switch the third operation to inputting alphabets, inputting symbols, or inputting numbers. Accordingly, switching between the input of alphabets, the input of symbols, and the input of numbers can be easily performed by the switch 330.

The first operation unit 40a includes the cursor movement keys 41 to move the cursor C as the first operation, and the second operation unit 40b includes the function keys 43 to which the predetermined functions are assigned as the second operation. The controller 32 is configured or programmed to, when both the cursor movement keys 41 and the function keys 43 are operated, move the cursor C by the movement amount larger than the movement amount of the cursor C when the cursor movement keys 41 are operated. Accordingly, as compared with a case in which the cursor C is moved a large distance by successively operating the cursor movement keys 41, the cursor C can be moved a large distance quickly.

The first operation unit 40a includes the cursor movement keys 41 to move the cursor C as the first operation, and the registration key 44 to confirm an input as the first operation. The second operation unit 40b includes the numeric keypad 42 including the plurality of keys to receive an input of numbers as the second operation. The controller 32 is configured or programmed to receive an input of one of an alphabet, a symbol, and a number when both the cursor movement key 41 or the registration key 44 and one of the plurality of keys of the numeric keypad 42 are operated. Accordingly, it is possible to easily input one of alphabets, symbols, and numbers using the cursor movement keys 41 and the numeric keypad 42 without using a software keyboard to receive an input of alphabets, symbols, and numbers.

The controller 32 is configured or programmed to switch between alphabets, symbols, and numbers as input candidates to be input by the numeric keypad 42 when the numeric keypad 42 is successively operated, and receive an input of selected ones of the alphabets, symbols, and numbers when the operation unit 40 other than the operated numeric keypad 42 is operated. Accordingly, it is possible to easily switch between the alphabets, symbols, and numbers to be input by operating only the numeric keypad 42.

The plurality of cursor movement keys 41 are arranged corresponding to the plurality of directions in which the cursor C is movable. The controller 32 is configured or programmed to switch between the alphabets, symbols, and numbers to be input depending on whether the registration key 44 or one of the plurality of cursor movement keys 41 is operated after the numeric keypad 42 is operated. Accordingly, the plurality of cursor movement keys 41 are arranged, and thus the number of alphabets, symbols, and numbers that can be input by one key of the numeric keypad 42 can be increased.

The teaching device 30 includes the list display operation unit 45 as a content display operation unit to receive an operation to cause the display 31 to display the contents of the third operation. The operator can easily visually recognize the contents of the third operation.

The contents of the third operation are displayed as the first list 340 of numbers and at least one of alphabets or symbols that can be input by the plurality of keys of the numeric keypad 42. The list display operation unit 45 is a physical operation unit configured to receive an operation to cause the display 31 to display the first list 340. Accordingly, the operator can easily recognize at least one of alphabets or symbols that can be input by the plurality of keys of the numeric keypad 42 by visually recognizing the first list 340.

The controller 32 is configured or programmed to, when the numeric keypad 42 is operated with the first list 340 displayed on the display 31, cause the display 31 to display the second list 350 including alphabets, symbols, and numbers that can be input by the operated numeric keypad 42 in correspondence with the arrangement positions of the cursor movement keys 41. Accordingly, the second list 350 is displayed on the display 31 in correspondence with the arrangement positions of the cursor movement keys 41, and thus the operator can intuitively visually recognize the alphabets, symbols, and numbers to be input by the cursor movement keys 41.

The controller 32 is configured or programmed to receive an input of an alphabet, a symbol, or a number corresponding to the registration key 44 or the arrangement position of the operated cursor movement key 41 when the registration key 44 or the cursor movement key 41 is operated with the second list 350 displayed on the display 31. Accordingly, the operator can operate the registration key 44 or the cursor movement keys 41 while visually recognizing the second list 350, and thus the operator can easily input a desired one of the alphabet, symbol, and number.

The teaching device 30 includes the list movement receiver 46 to receive an operation to change the display position of the first list 340. Accordingly, the operator can change the display position of the first list 340 on the input screen 310 according to the operator's preference by operating the list movement receiver 46.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

While the example in which the third operation includes all of moving the cursor C a larger distance than a distance traveled under a normal operation on the input screen 310, inputting alphabets on the input screen 310, and inputting symbols on the input screen 310 has been shown in the aforementioned embodiment, the present disclosure is not limited to this. For example, the third operation may include one or two of moving the cursor C a larger distance than a distance traveled under a normal operation on the input screen 310, inputting alphabets on the input screen 310, and inputting symbols on the input screen 310. Alternatively, the third operation may include an operation other than moving the cursor C a larger distance than a distance traveled under a normal operation, inputting alphabets, and inputting symbols.

While the example in which the switch 330 is provided on the input screen 310 to switch the third operation to inputting alphabets or inputting symbols has been shown in the aforementioned embodiment, the present disclosure is not limited to this. For example, the switch 330 may be a physical operation unit arranged separately from the display 31.

While the example in which the first operation unit 40a includes the cursor movement keys 41 and the registration key 44 has been shown in the aforementioned embodiment, the present disclosure is not limited to this. For example, the first operation unit 40a may include a key other than the cursor movement keys 41 and the registration key 44.

While the example in which the second operation unit 40b includes the numeric keypad 42 has been shown in the aforementioned embodiment, the present disclosure is not limited to this. For example, the second operation unit 40b may include a key other than the numeric keypad 42.

While the example in which the first list 340 and the second list 350 are displayed on the display 31 has been shown in the aforementioned embodiment, the present disclosure is not limited to this. For example, only the first list 340 may be displayable on the display 31.

While the example in which the display position of the first list 340 is changed has been shown in the aforementioned embodiment, the present disclosure is not limited to this. For example, the display position of the first list 340 on the input screen 310 may be fixed.

While the example in which the input screen 310 is an input screen 310 of editing software has been shown in the aforementioned embodiment, the present disclosure is not limited to this. For example, the input screen 310 may be a screen for receiving an input of a robot 10 and an external axis to be taught by the teaching device 30.

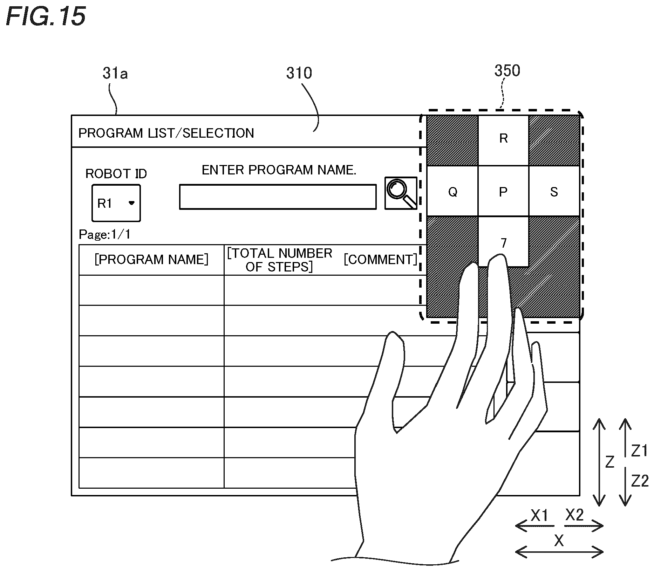

While the example in which the controller 32 receives an input of an alphabet, a symbol, or a number corresponding to the registration key 44 or the arrangement position of the operated cursor movement key 41 when the registration key 44 or the cursor movement key 41 is operated with the second list 350 displayed on the display 31 has been shown in the aforementioned embodiment, the present disclosure is not limited to this. For example, as in a modified example shown in FIG. 15, a display 31a may include a touch panel, and when one of the alphabet, symbol, and number in the second list 350 is operated with the second list 350 displayed on the touch panel, the controller 32 may receive an input of an operated one of the alphabet, symbol, and number. The second list 350 is operated by the fingers of the operator, for example. Accordingly, the operator can easily input any of the alphabets, symbols, and numbers in the second list 350 with his/her fingers. The display 31a including the touch panel may receive an operation to cause the display 31 to display the first list 340.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

### Aspects

It will be appreciated by those skilled in the art that the exemplary embodiments described above are specific examples of the following aspects.

### (Item 1)

A teaching device for a robot, the teaching device comprising:
a display;
a first physical operation unit separate from the display to receive a first operation;
a second physical operation unit separate from the display to receive a second operation; and
a controller configured or programmed to perform the first operation and the second operation; wherein
the controller is configured or programmed to, when both the first operation unit and the second operation unit are operated, receive a third operation different from the first operation and the second operation, and perform the third operation.

### (Item 2)

The teaching device according to item 1, wherein
the first operation includes an operation to move the cursor; and
the third operation includes at least one of moving the cursor different from the first operation on the display, inputting an alphabet on the display, inputting a symbol on the display, or inputting a number on the display.

### (Item 3)

The teaching device according to item 2, wherein
the display is configured to display an input screen; and
the teaching device further comprises a switch on the input screen to switch the third operation to inputting the alphabet, inputting the symbol, or inputting the number.

### (Item 4)

The teaching device according to item 2 or 3, wherein
the first operation unit includes a cursor movement key to move the cursor as the first operation;
the second operation unit includes a function key to which a predetermined function is assigned as the second operation; and
the controller is configured or programmed to, when both the cursor movement key and the function key are operated, move the cursor by a movement amount larger than a movement amount of the cursor when the cursor movement key is operated.

### (Item 5)

The teaching device according to any one of items 1 **to 4,** wherein
the first operation unit includes:
   a cursor movement key to move a cursor as the first operation; and
   a registration key to confirm an input as the first operation;
the second operation unit includes a numeric keypad including a plurality of keys to receive an input of a number as the second operation; and
the controller is configured or programmed to receive an input of one of an alphabet, a symbol, and the number when both the cursor movement key or the registration key and one of the plurality of keys of the numeric keypad are operated.

### (Item 6)

The teaching device according to item 5, wherein
the controller is configured or programmed to:
switch between the alphabet, the symbol, and the number as an input candidate to be input by the numeric keypad when the numeric keypad is successively operated;
   and
receive an input of a selected one of the alphabet, the symbol, and the number when an operation unit other than the operated numeric keypad is operated.

### (Item 7)

The teaching device according to item 5 or 6, wherein
the cursor movement key includes a plurality of cursor movement keys arranged corresponding to a plurality of directions in which the cursor is movable; and
the controller is configured or programmed to switch between the alphabet, the symbol, and the number to be input depending on whether the registration key or one of the plurality of cursor movement keys is operated after the numeric keypad is operated.

### (Item 8)

The teaching device according to any one of items 1 to 7, comprising:
a content display operation unit to receive an operation to cause the display to display a content of the third operation.

### (Item 9)

The teaching device according to item 8, wherein
the first operation unit includes:
   a cursor movement key to move a cursor as the first operation; and
   a registration key to confirm an input as the first operation;
the second operation unit includes a numeric keypad including a plurality of keys to receive an input of a number as the second operation;
the controller is configured or programmed to receive an input of one of an alphabet, a symbol, and the number when both the cursor movement key or the registration key and one of the plurality of keys of the numeric keypad are operated;
the content of the third operation is displayed as a first list including the alphabet, the symbol, and the number to be input by the plurality of keys of the numeric keypad; and
the content display operation unit includes a physical list display operation unit to receive an operation to cause the display to display the first list.

### (Item 10)

The teaching device according to item 9, wherein the controller is configured or programmed to, when the numeric keypad is operated with the first list displayed on the display, cause the display to display a second list including the alphabet, the symbol, and the number to be input by the operated numeric keypad in correspondence with an arrangement position of the cursor movement key.

### (Item 11)

The teaching device according to item 10, wherein the controller is configured or programmed to receive an input of the alphabet, the symbol, or the number corresponding to the registration key or the arrangement position of the operated cursor movement key when the registration key or the cursor movement key is operated with the second list displayed on the display.

### (Item 12)

The teaching device according to item 10, wherein
the display includes a touch panel; and
the controller is configured or programmed to receive an input of an operated one of the alphabet, the symbol, and the number when one of the alphabet, the symbol, and the number in the second list is operated with the second list displayed on the touch panel.

### (Item 13)

The teaching device according to any one of items 9 to 12, further comprising:
a list movement receiver to receive an operation to change a display position of the first list.

### (Item 14)

A robot system comprising:
a robot;
a robot controller configured or programmed to control the robot; and
a teaching device for the robot; wherein
the teaching device includes:
   a display;
   a first physical operation unit separate from the display to receive a first operation;
   a second physical operation unit separate from the display to receive a second operation; and
   a controller configured or programmed to perform the first operation and the second operation; and
the controller is configured or programmed to, when both the first operation unit and the second operation unit are operated, receive a third operation different from the first operation and the second operation, and perform the third operation.

### (Item 15)

A robot teaching method using a teaching device including a display, a first physical operation unit separate from the display, a second physical operation unit separate from the display, and a controller configured or programmed to perform the first operation and the second operation, wherein
the controller is configured or programmed to perform the first operation when the first operation unit is operated;
the controller is configured or programmed to perform the second operation when the second operation unit is operated; and
the controller is configured or programmed to, when both the first operation unit and the second operation unit are operated, receive a third operation different from the first operation and the second operation, and perform the third operation.

## Claims

1. A teaching device for a robot, the teaching device comprising:
a display;
a first physical operation unit separate from the display to receive a first operation;
a second physical operation unit separate from the display to receive a second operation; and
a controller configured or programmed to perform the first operation and the second operation; wherein
the controller is configured or programmed to, when both the first operation unit and the second operation unit are operated, receive a third operation different from the first operation and the second operation, and perform the third operation.

2. The teaching device according to claim 1, wherein
the first operation includes an operation to move the cursor; and
the third operation includes at least one of moving the cursor different from the first operation on the display, inputting an alphabet on the display, inputting a symbol on the display, or inputting a number on the display.

3. The teaching device according to claim 2, wherein
the display is configured to display an input screen; and
the teaching device further comprises a switch on the input screen to switch the third operation to inputting the alphabet, inputting the symbol, or inputting the number.

4. The teaching device according to claim 2, wherein
the first operation unit includes a cursor movement key to move the cursor as the first operation;
the second operation unit includes a function key to which a predetermined function is assigned as the second operation; and
the controller is configured or programmed to, when both the cursor movement key and the function key are operated, move the cursor by a movement amount larger than a movement amount of the cursor when the cursor movement key is operated.

5. The teaching device according to claim 1, wherein
the first operation unit includes:
a cursor movement key to move a cursor as the first operation; and
a registration key to confirm an input as the first operation;
the second operation unit includes a numeric keypad including a plurality of keys to receive an input of a number as the second operation; and
the controller is configured or programmed to receive an input of one of an alphabet, a symbol, and the number when both the cursor movement key or the registration key and one of the plurality of keys of the numeric keypad are operated.

6. The teaching device according to claim 5, wherein
the controller is configured or programmed to:
switch between the alphabet, the symbol, and the number as an input candidate to be input by the numeric keypad when the numeric keypad is successively operated; and
receive an input of a selected one of the alphabet, the symbol, and the number when an operation unit other than the operated numeric keypad is operated.

7. The teaching device according to claim 5, wherein
the cursor movement key includes a plurality of cursor movement keys arranged corresponding to a plurality of directions in which the cursor is movable; and
the controller is configured or programmed to switch between the alphabet, the symbol, and the number to be input depending on whether the registration key or one of the plurality of cursor movement keys is operated after the numeric keypad is operated.

8. The teaching device according to claim 1, comprising:
a content display operation unit to receive an operation to cause the display to display a content of the third operation.

9. The teaching device according to claim 8, wherein
the first operation unit includes:
a cursor movement key to move a cursor as the first operation; and
a registration key to confirm an input as the first operation;
the second operation unit includes a numeric keypad including a plurality of keys to receive an input of a number as the second operation;
the controller is configured or programmed to receive an input of one of an alphabet, a symbol, and the number when both the cursor movement key or the registration key and one of the plurality of keys of the numeric keypad are operated;
the content of the third operation is displayed as a first list including the alphabet, the symbol, and the number to be input by the plurality of keys of the numeric keypad; and
the content display operation unit includes a physical list display operation unit to receive an operation to cause the display to display the first list.

10. The teaching device according to claim 9, wherein the controller is configured or programmed to, when the numeric keypad is operated with the first list displayed on the display, cause the display to display a second list including the alphabet, the symbol, and the number to be input by the operated numeric keypad in correspondence with an arrangement position of the cursor movement key.

11. The teaching device according to claim 10, wherein the controller is configured or programmed to receive an input of the alphabet, the symbol, or the number corresponding to the registration key or the arrangement position of the operated cursor movement key when the registration key or the cursor movement key is operated with the second list displayed on the display.

12. The teaching device according to claim 10, wherein
the display includes a touch panel; and
the controller is configured or programmed to receive an input of an operated one of the alphabet, the symbol, and the number when one of the alphabet, the symbol, and the number in the second list is operated with the second list displayed on the touch panel.

13. The teaching device according to claim 9, further comprising:
a list movement receiver to receive an operation to change a display position of the first list.

14. A robot system comprising:
a robot;
a robot controller configured or programmed to control the robot; and
a teaching device for the robot; wherein
the teaching device includes:
a display;
a first physical operation unit separate from the display to receive a first operation;
a second physical operation unit separate from the display to receive a second operation; and
a controller configured or programmed to perform the first operation and the second operation; and
the controller is configured or programmed to, when both the first operation unit and the second operation unit are operated, receive a third operation different from the first operation and the second operation, and perform the third operation.

15. A robot teaching method using a teaching device including a display, a first physical operation unit separate from the display, a second physical operation unit separate from the display, and a controller configured or programmed to perform the first operation and the second operation, wherein
the controller is configured or programmed to perform the first operation when the first operation unit is operated;
the controller is configured or programmed to perform the second operation when the second operation unit is operated; and
the controller is configured or programmed to, when both the first operation unit and the second operation unit are operated, receive a third operation different from the first operation and the second operation, and perform the third operation.
